# EUROPÄISCHE PATENTSCHRIFT

(11) **EP 3 888 998 B1**
(45) Veröffentlichungstag und Bekanntmachung des Hinweises auf die Patenterteilung: **18.10.2023**
(21) Anmeldenummer: 21159848.7
(22) Anmeldetag: 01.03.2021
(51) Int. Cl.: B61D 17/18, B61D 29/00, B60Q 3/20, B60Q 3/43

(54) **DECKENELEMENT FÜR EIN SCHIENENFAHRZEUG UND SCHIENENFAHRZEUG**
RAIL VEHICLE AND COVER ELEMENT FOR A RAIL VEHICLE
ÉLÉMENT DE PLAFOND POUR UN VÉHICULE FERROVIAIRE ET VÉHICULE FERROVIAIRE

(30) Priorität: 01.04.2020 DE 102020204222
(43) Veröffentlichungstag der Anmeldung: 06.10.2021
(73) Patentinhaber: Siemens Mobility GmbH, 81739 München (DE)
(72) Erfinder: Schiefer, Benno, 40233 Düsseldorf (DE)
(74) Vertreter: Siemens Patent Attorneys

(56) Entgegenhaltungen:
- WO-A1-2020/011462
- WO-A2-2014/206823
- DE-A1-102017 215 339
- JP-A- 2016 162 479
- JP-A- 2017 065 487

## Beschreibung

Es wird ein Deckenelement für ein Schienenfahrzeug angegeben. Darüber hinaus wird ein Schienenfahrzeug angegeben. Weiterhin wird ein Verfahren zum Betreiben eines Deckenelements angegeben.

Ein bekanntes Deckenelement nach dem Oberbegriff von Anspruch 1 ist aus der WO 2020/011462 A1 bekannt. Vorgesehene Aufnahmeprofile dienen zur Aufnahme von Lichtbändern zum Beleuchten eines Innenraums des Schienenfahrzeugs und/oder zum Anzeigen einer Information für einen Fahrgast im Innenraum des Schienenfahrzeugs. Weitere bekannte Deckenanordnungen für Schienenfahrzeuge ergeben sich aus der DE 10 2017 215339 A1 und der WO 2014/206823 A2.

Eine zu lösende Aufgabe besteht darin, ein Deckenelement für ein Schienenfahrzeug anzugeben, das in seiner geometrischen Form variiert werden kann. Weitere zu lösende Aufgaben bestehen darin, ein Schienenfahrzeug mit einem solchen Deckenelement und ein Verfahren zum Betreiben eines solchen Deckenelements anzugeben.

Diese Aufgaben werden unter anderem durch die Gegenstände der Patentansprüche 1, 10 und 11 gelöst. Vorteilhafte Ausgestaltungen und Weiterbildungen sind Gegenstand der weiteren abhängigen Patentansprüche und gehen weiterhin aus der nachfolgenden Beschreibung und den Zeichnungen hervor.

Zunächst wird das Deckenelement angegeben.

Gemäß zumindest einer Ausführungsform umfasst das Deckenelement für ein Schienenfahrzeug einen Träger. Der Träger kann Kunststoff oder Metall, wie zum Beispiel Aluminium oder Edelstahl, aufweisen oder daraus bestehen. Der Träger ist zum Beispiel plattenförmig.

Gemäß zumindest einer Ausführungsform weist das Deckenelement mehrere, auf einer Seite des Trägers angeordnete längliche Aufnahmeprofile auf. Die Aufnahmeprofile sind auf dem Träger fest und dauerhaft befestigt. Insbesondere sind die Aufnahmeprofile auf einem ebenen Abschnitt des Trägers angeordnet. Dieser Abschnitt ist beispielsweise mindestens so lang ist wie die Aufnahmeprofile. Dieser Abschnitt weist zum Beispiel eine Fläche von zumindest 1 m² oder zumindest 5 m² auf.

Die Aufnahmeprofile sind bevorzugt im Rahmen der Herstellungstoleranz alle identisch ausgebildet, bestehen also aus dem gleichen Material und weisen die gleichen Abmessungen und die gleiche Form auf. Beispielsweise weisen die Aufnahmeprofile Kunststoff oder Metall, wie Aluminium oder Edelstahl, auf oder bestehen daraus.

Ein Profil, auch Konstruktionsprofil genannt, ist ein langgestrecktes Bauteil, das insbesondere durch ein Extrusionsverfahren beziehungsweise Stangenpressverfahren oder aber auch durch Rollen oder Biegen von Blechteilen hergestellt ist. Die Aufnahmeprofile sind insbesondere um ein Vielfaches länger als breit und hoch. Beispielsweise betragen die Breiten der Aufnahmeprofile, gemessen parallel zur Haupterstreckungsebene des Trägers, zwischen einschließlich 10 mm und einschließlich 80 mm. Höhen der Aufnahmeprofile, gemessen senkrecht zur Haupterstreckungsebene des Trägers, betragen beispielsweise zwischen einschließlich 20 mm und einschließlich 120 mm. Längen der Aufnahmeprofile, gemessen entlang der Längsrichtung der Aufnahmeprofile und parallel zur Haupterstreckungsebene des Trägers betragen beispielsweise zumindest 50 cm oder zumindest 1 m.

Die Aufnahmeprofile sind bevorzugt auf Abstandshaltern angeordnet, so dass sie nicht direkt auf dem Träger aufliegen, sondern von dem Träger durch die Abstandshalter beabstandet sind. Die Abstandshalter können matrixartig oder rasterartig auf dem Träger verteilt sein. Die Abstandshalter können aus dem gleichen Material wie der Träger bestehen. Beispielsweise sind die Aufnahmeprofile durch die Abstandshalter zwischen einschließlich 10 mm und einschließlich 100 mm von dem Träger beabstandet. Die Abstandshalter sind zum Beispiel zylinderartig oder säulenartig ausgebildet. Bevorzugt befinden sich die Aufnahmeprofile alle auf gleicher Höhe bezüglich des Trägers und sind in dieser Höhe fest auf diesem montiert. Beispielsweise umfasst das Deckenelement zumindest fünf oder zumindest zehn oder zumindest 20 Aufnahmeprofile.

Gemäß zumindest einer Ausführungsform sind die Aufnahmeprofile in einer Querrichtung nebeneinander angeordnet und erstrecken sich jeweils entlang einer senkrecht zur Querrichtung verlaufenden Längsrichtung. Die Querrichtung und die Längsrichtung sind dabei Richtungen parallel zur Haupterstreckungsebene des Trägers. Die Breiten der Aufnahmeprofile sind parallel zur Querrichtung gemessen, die Längen der Aufnahmeprofile sind parallel zur Längsrichtung gemessen.

Die Aufnahmeprofile sind in Querrichtung bevorzugt in gleichmäßigen Abständen angeordnet. Die Abstände zwischen zwei benachbarten Aufnahmeprofilen, gemessen entlang der Querrichtung, sind bevorzugt kleiner als die Breiten der Aufnahmeprofile, beispielsweise höchstens die Hälfte oder höchstens 1/5 der Breite.

Gemäß zumindest einer Ausführungsform ist ersten Aufnahmeprofilen jeweils ein längliches Zierprofil zugeordnet. Ein einem ersten Aufnahmeprofil zugeordnetes Zierprofil ist dabei auf diesem ersten Aufnahmeprofil angeordnet. Als erste Aufnahmeprofile werden hier und im Folgenden also solche Aufnahmeprofile bezeichnet, denen ein Zierprofil zugeordnet ist, das heißt auf denen ein Zierprofil angeordnet ist. Jedem ersten Aufnahmeprofil kann ein eigenes Zierprofil eineindeutig zugeordnet sein oder es kann mehreren nebeneinanderliegenden ersten Aufnahmeprofilen ein gemeinsames Zielprofil zugeordnet sein. Entsprechend ist jedem Zierprofil zumindest ein erstes Aufnahmeprofil zugeordnet. Die Zierprofile sind auf den dem Träger abgewandten Seiten der zugeordneten ersten Aufnahmeprofile angeordnet.

Die Zierprofile umfassen beispielsweise Kunststoff oder Metall, wie Aluminium, oder bestehen daraus. Die Zierprofile sind bevorzugt aus einem lichtundurchlässigen oder lichtreflektierenden Material. Die Längen der Zierprofile sind beispielsweise so groß wie die der Aufnahmeprofile. Insbesondere überlappen die Zierprofile mit den zugeordneten ersten Aufnahmeprofilen entlang der Längsrichtung vollständig. Breiten und Höhen der Zierprofile sind insbesondere so gewählt, dass die Zierprofile über oder in die ersten Aufnahmeprofile geschoben werden können. Die Höhen der Zierprofile sind beispielsweise größer als die der Aufnahmeprofile.

Gemäß zumindest einer Ausführungsform sind die Zierprofile an den ersten Aufnahmeprofilen verschiebbar befestigt, sodass sich die Zierprofile bezüglich der ersten Aufnahmeprofile in Richtung hin und/oder weg von dem Träger verschieben lassen. Mit anderen Worten sind die Zierprofile und die ersten Aufnahmeprofile ineinander oder übereinander geschoben und miteinander stabil verbunden, wobei sich jedoch der Abstand der Zierprofile zum Träger variieren lässt. Jedes Zierprofil lässt sich dabei bevorzugt einzeln unabhängig von den anderen Zierprofilen in Richtung hin zur oder weg von dem Träger verschieben. Zum Beispiel kann der Abstand zwischen den Zierprofilen und dem Träger jeweils um mindestens 1 cm oder mindestens 5 cm oder mindestens 10 cm variiert werden.

In mindestens einer Ausführungsform umfasst das Deckenelement für ein Schienenfahrzeug einen Träger und mehrere auf einer Seite des Trägers angeordnete längliche Aufnahmeprofile. Die Aufnahmeprofile sind in einer Querrichtung nebeneinander angeordnet und erstrecken sich jeweils entlang einer senkrecht zur Querrichtung verlaufenden Längsrichtung. Ersten Aufnahmeprofilen ist jeweils ein längliches Zierprofil zugeordnet, wobei ein einem ersten Aufnahmeprofil zugeordnetes Zierprofil auf diesem ersten Aufnahmeprofil angeordnet ist. Die Zierprofile sind an den ersten Aufnahmeprofilen verschiebbar befestigt, sodass sich die Zierprofile bezüglich der ersten Aufnahmeprofile in Richtung hin und/oder weg von dem Träger verschieben lassen.

Wird ein solches Deckenelement als Decke oder Deckenabschnitt in einem Schienenfahrzeug verwendet, kann die Form der Decke durch Verschieben der Zierprofile variiert werden. Das Deckenelement kann so bei einer Vielzahl von verschiedenen Schienenfahrzeugen eingesetzt werden, um unterschiedliche Raumwirkungen gemäß Kundenwunsch zu generieren, ohne dabei jedes Mal den Aufbau des Deckenelements verändern zu müssen.

Gemäß zumindest einer Ausführungsform sind in zweiten Aufnahmeprofilen jeweils mehrere, in Längsrichtung hintereinander aufgereihte LEDs (Leuchtdioden) angeordnet. Als zweite Aufnahmeprofile werden hier und im Folgenden solche Aufnahmeprofile bezeichnet, in denen LEDs angeordnet sind. Auf zweiten Aufnahmeprofilen sind bevorzugt keine Zierprofile angeordnet. Andersherum sind in ersten Aufnahmeprofilen bevorzugt keine LEDs angeordnet.

Beispielsweise sind in jedem zweiten Aufnahmeprofil zumindest zehn oder zumindest 50 LEDs angeordnet. In jedem der zweiten Aufnahmeprofile kann ein LED-Band, umfassend eine flexible Leiterplatte und eine Vielzahl von hintereinander aufgereihten LEDs, angeordnet sein. Die LEDs emittieren im Betrieb bevorzugt sichtbares Licht. Bevorzugt ist jedes Aufnahmeprofil des Deckenelements entweder ein erstes oder ein zweites Aufnahmeprofil.

Gemäß zumindest einer Ausführungsform überragen die Zierprofile die LEDs in Richtung weg von dem Träger. Beispielsweise überragen die Zierprofile die LEDs um zumindest 10 mm oder zumindest 20 mm. Licht, welches von den LEDs im Betrieb abgestrahlt wird, trifft dann bevorzugt auf Seitenflächen der Zierprofile und wird von diesen reflektiert. Die LEDs liegen also vertieft und bei Verwendung des Deckenelements in einem Schienenfahrzeug werden daher seitlich sitzende Fahrgäste bevorzugt nicht geblendet.

Gemäß zumindest einer Ausführungsform ist die verschiebbare Befestigung der Zierprofile an den ersten Aufnahmeprofilen durch eine Ratschenfunktion und/oder ein Schraubengewinde und/oder höhenverstellbaren Magneten realisiert. Bei einer Ratschenfunktion sind die Aufnahmeprofile und die Zierprofile beispielsweise gezahnt, wobei die Zähne ineinandergreifen. Das Deckenelement kann einen Schrittmotor umfassen, der dazu eingerichtet ist, die Zierprofile bezüglich der ersten Aufnahmeprofile zu verschieben. Auf diese Weise kann ein Verschieben der Aufnahmeprofile automatisiert erfolgen.

Gemäß zumindest einer Ausführungsform sind die Aufnahmeprofile und die Zierprofile U-Profile. Das heißt, in Querschnittsansicht haben die Aufnahmeprofile und die Zierprofile eine U-förmige Form. Mit anderen Worten weisen die Aufnahmeprofile und die Zierprofile jeweils einen langgestreckten Mittelabschnitt und in Querrichtung beidseitig des Mittelabschnitts angeordnete langgestreckte Schenkel auf, die sich ausgehend von dem Mittelabschnitt weg von dem Mittelabschnitt erstrecken. An Seiten der Profile gegenüber dem Mittelabschnitt sind die Profile jeweils offen.

Die Aufnahmeprofile und die Zierprofile sind beispielsweise so auf dem Träger angeordnet, dass die Haupterstreckungsebenen der Mittelabschnitte jeweils parallel zur Haupterstreckungsebene des Trägers und die Haupterstreckungsebenen der Schenkel jeweils quer oder senkrecht zur Haupterstreckungsebene des Trägers verlaufen. Die Aufnahmeprofile sind insbesondere so auf dem Träger aufgebracht, dass die Mittelabschnitte dem Träger zugewandt sind und die Schenkel sich ausgehend von dem Mittelabschnitt in Richtung weg von dem Träger erstrecken. Die LEDs sind bevorzugt auf den Mittelabschnitten der zweiten Aufnahmeprofile angeordnet. Das von den LEDs im Betrieb emittierte Licht kann dann über die offene Seite der zweiten Aufnahmeprofile austreten.

Gemäß zumindest einer Ausführungsform sind die Zierprofile derart auf den ersten Aufnahmeprofilen angeordnet, dass zwischen den ersten Aufnahmeprofilen und den zugeordneten Zierprofilen jeweils ein Kanal, insbesondere ein röhrenförmiger Kanal, gebildet ist. Dafür sind insbesondere die Zierprofile und die ersten Aufnahmeprofile mit ihren offenen Seiten einander zugewandt aufeinander angeordnet beziehungsweise ineinander oderübereinander geschoben. Mit anderen Worten sind die Zierprofile auf den ersten Aufnahmeprofilen derart angeordnet, dass die Schenkel der ersten Aufnahmeprofile und der Zierprofile zwischen den Mittelabschnitten der ersten Aufnahmeprofile und der Zierprofile liegen. Die dadurch gebildeten Kanäle sind in Richtungen senkrecht zur Längsrichtung vollständig von den Profilen umschlossen. Die Kanäle erstrecken sich jeweils bevorzugt über die gesamte Länge des ersten Aufnahmeprofils beziehungsweise Zierprofils.

Durch die Wahl von U-Profilen können die Zierprofile und die ersten Aufnahmeprofile derart ineinander geschoben werden, dass die Schenkel der Zierprofile die Schenkel der ersten Aufnahmeprofile umklammern oder umgekehrt. Bevorzugt liegen die Schenkel der Zierprofile und der zugeordneten ersten Aufnahmeprofile dann unmittelbar aufeinander auf. Beim Verschieben der Zierprofile werden die Schenkel der Zierprofile innerhalb der Bereiche zwischen zwei benachbarten Aufnahmeprofilen geführt. Der Abstand zwischen je zwei benachbarten Aufnahmeprofilen ist dann bevorzugt im Bereich der Stärke der Schenkel des Zierprofils. Zum Beispiel ist der Abstand höchstens doppelt so groß oder höchstens 1,5-mal so groß wie die Stärke der Schenkel.

Gemäß zumindest einer Ausführungsform sind die ersten Aufnahmeprofile und die zweiten Aufnahmeprofile in Querrichtung alternierend angeordnet. Das heißt, zwischen je zwei Aufnahmeprofilen mit jeweils einem zugeordneten Zierprofil ist ein Aufnahmeprofil mit jeweils LEDs angeordnet und umgekehrt.

Alternativ ist es aber auch möglich, dass zwischen zwei ersten Aufnahmeprofilen mehrere, zum Beispiel zumindest drei oder zumindest fünf, oder zumindest zehn zweite Aufnahmeprofile aber kein weiteres erstes Aufnahmeprofil angeordnet sind. Bei einer solchen Anordnung können beispielsweise mithilfe der LEDs dieser zweiten Aufnahmeprofile zweidimensionale Bilder, Piktogramme oder Symbole dargestellt werden. In diesem Fall sind beispielsweise die zweiten Aufnahmeprofile schmäler als die ersten Aufnahmeprofile gewählt, um eine höhere Pixeldichte zu erreichen.

Gemäß zumindest einer Ausführungsform weist das Deckenelement eine Streuplatte zur Streuung der von den LEDs emittierten Strahlung auf. Die Streuplatte ist beispielsweise aus transluzentem Kunststoff gebildet. Die Streuplatte streut die von den LEDs emittierte Strahlung beispielsweise diffus.

Gemäß zumindest einer Ausführungsform ist die Streuplatte zwischen zwei Zierprofilen eingespannt. Beispielsweise umfassen dazu die Schenkel der Zierprofile an Außenseiten Nuten, in die die Streuplatte eingeführt ist.

Gemäß zumindest einer Ausführungsform sind ein oder mehrere zweite Aufnahmeprofile mit LEDs zwischen der Streuplatte und dem Träger angeordnet. Das heißt, in einer Draufsicht betrachtet überdeckt die Streuplatte ein oder mehrere zweite Aufnahmeprofile und die darin angeordneten LEDs. Im eingebauten Zustand des Deckenelements sind für einen Passagier im Schienenfahrzeug die einzelnen LEDs aufgrund der Streuung durch die Streuplatte dann bevorzugt nicht mehr als separate Lichtpunkte, sondern als homogene Lichtfläche wahrnehmbar. Es können auch mehrere solcher Streuplatten in dem Deckenelement angeordnet sein, zum Beispiel in der Mitte und zusätzlich an den Randzonen des Deckenelements. Dadurch kann erreicht werden, dass eine gleichmäßige und ausreichende Lichtverteilung, sowohl im Gangbereich, als auch über den Fahrgast-Sitzplätzen gewährleistet wird.

Gemäß zumindest einer Ausführungsform umfasst das Deckenelement weiter einen Luftkanal an einer den Aufnahmeprofilen abgewandten Seite des Trägers. Der Luftkanal, oder auch Luftschacht genannt, ist zur Zuführung von Kaltluft oder Warmluft vorgesehen. Im eingebauten Zustand des Deckenelements sind die Aufnahmeprofile einem Innenraum des Schienenfahrzeugs zugewandt und der Luftkanal ist dem Innenraum abgewandt. Der Luftkanal kann im eingebauten Zustand mit einer Klimaanlage verbunden sein, die Kaltluft oder Warmluft in den Luftkanal einspeist. Der Luftkanal ist durch ein Rohr, zum Beispiel aus Metall, gebildet.

Gemäß zumindest einer Ausführungsform sind zumindest einige Kanäle über Öffnungen in den den Kanälen zugeordneten ersten Aufnahmeprofilen fluidtechnisch mit dem Luftkanal verbunden, sodass über den Luftkanal zugeführte Luft über die Öffnungen in die Kanäle einströmen kann. Beispielsweise sind ausgehend von dem Luftkanal Stichkanäle durch den Träger zu den ersten Aufnahmeprofilen geführt, wobei die Stichkanäle über die Öffnung in den ersten Aufnahmeprofilen mit den Kanälen zwischen den ersten Aufnahmeprofilen und den Zierprofilen fluidtechnisch verbunden sind. Die Öffnungen in den ersten Aufnahmeprofilen sind bevorzugt in den Mittelabschnitten der ersten Aufnahmeprofile gebildet.

Gemäß zumindest einer Ausführungsform weisen die den ersten Aufnahmeprofilen mit Öffnungen zugeordneten Zierprofile Löcher beziehungsweise eine Perforierung, insbesondere eine gleichmäßige Perforierung auf, aus denen die Luft in den Kanälen in die Umgebung ausströmen, insbesondere in den Fahrgastraum strömen kann. Die Löcher beziehungsweise die Perforierung sind beispielsweise in dem Mittelabschnitt und/oder den Schenkeln der Zierprofile angeordnet.

Durch die Löcher in den Zierprofilen wird die in die Kanäle eingespeiste Luft an ausgewählte Stellen in die Umgebung abgegeben und kann dann zur gezielten Kühlung oder Erwärmung eines Innenraums eines Schienenfahrzeuges dienen. Dadurch dass die Zierprofile bezüglich der ersten Aufnahmeprofile verschiebbar sind, kann das Volumen der Kanäle zwischen den Zierprofilen und den ersten Aufnahmeprofilen variiert werden. Das heißt, die Größe des Entspannungsraum für die in die Kanäle eingespeiste Luft, der sich durch das Volumen der oben genannten Kanäle definiert, kann verändert und damit die Austrittsgeschwindigkeit der Luft durch die Löcher geregelt werden. Löcher in den Schenkeln der Zierprofile können zudem vorteilhaft zur Kühlung der LEDs in benachbarten zweiten Aufnahmeprofilen dienen.

Die Kanäle, die über die Öffnungen in den ersten Aufnahmeprofilen fluidtechnisch mit dem Luftkanal verbunden sind, können an den längsseitigen Enden durch eine flexible Abdeckung, beispielsweise durch eine Gummihaut, abgedichtet sein, sodass an den Enden keine Luft austritt auch, wenn durch Verschieben der Zierprofile der Kanalquerschnitt und damit auch der Abdeckungsquerschnitt verändert wird.

Gemäß zumindest einer Ausführungsform umfasst das Deckenelement eine Steuereinheit. Die Steuereinheit ist signaltechnisch mit den LEDs verbunden und dazu eingerichtet, die LEDs oder verschiedene Gruppen von LEDs einzeln und unabhängig anzusteuern. Die Steuereinheit ist beispielsweise auf der den Aufnahmeprofilen abgewandten Seite des Trägers angeordnet.

Zum Beispiel umfasst das Deckenelement verschiedenfarbige LEDs, wobei mit der Steuereinheit verschiedenfarbige LEDs individuell ansteuerbar sind, sodass die von dem Deckenelement emittierte Lichtfarbe variiert werden kann.

Als nächstes wird das Schienenfahrzeug angegeben. Das Schienenfahrzeug weist ein hier beschriebenes Deckenelement auf. Das Deckenelement bildet insbesondere eine Decke oder einen Abschnitt einer Decke in einem Innenraum des Schienenfahrzeuges, insbesondere in einem Aufenthaltsraum oder Abteil für Fahrgäste. Das Deckenelement ist dabei insbesondere so in dem Schienenfahrzeug montiert, dass die Seite des Trägers mit den Aufnahmeprofilen dem Innenraum zugewandt ist. Die LEDs beleuchten im bestimmungsgemäßen Betrieb den Innenraum des Schienenfahrzeuges.

Als nächstes wird das Verfahren zum Betreiben eines Deckenelements angegeben. Während des Verfahrens ist das Deckenelement in einem Innenraum eines Schienenfahrzeugs verbaut. Die LEDs werden in Abhängigkeit davon, wie viele Fahrgäste im Innenraum des Schienenfahrzeugs sind, angesteuert. Alternativ oder zusätzlich werden die LEDs so angesteuert, dass sie einem Fahrgast einen empfohlenen Weg im Schienenfahrzeug signalisieren. Alternativ oder zusätzlich werden die LEDs so angesteuert, dass Bilder oder Piktogramme dargestellt werden. Das Ansteuern der LEDs erfolgt insbesondere mithilfe der Steuereinheit.

Umfasst das Deckenelement verschiedenfarbige LEDs, sind zum Beispiel unterschiedlichen Belegungsgraden des Innenraums mit Fahrgästen unterschiedliche Farben zugeordnet. Zum Beispiel wird einem niedrigen Belegungsgrad die Farbe Grün, einem mittleren Belegungsgrad die Farbe Gelb oder Orange und einem hohen Belegungsgrad die Farbe Rot zugeordnet. Im Betrieb werden dann die LEDs so angesteuert, dass das Deckenelement Licht mit einer Farbe emittiert, die dem aktuellen Belegungsgrad zugeordnete ist. So kann ein Fahrgast beim Betreten des Innenraums sofort erkennen, ob er einen Platz bekommen wird oder ob er lieber in einen anderen Innenraum/anderen Waggon des Schienenfahrzeuges geht. "Belegungsrad" meint hier die Dichte oder Anzahl an Fahrgästen im Innenraum.

Die LEDs können alternativ oder zusätzlich so angesteuert werden, dass sie einem Fahrgast einen empfohlenen Weg im Schienenfahrzeug signalisieren. Beispielsweise werden dabei die LEDs so angesteuert, dass an dem Deckenelement Pfeile dargestellt werden, die für einen Fahrgast im Innenraum sichtbar sind. Die Pfeile können beispielsweise einen Weg zu einem weniger belegten Waggon andeuten.

Um dies zu realisieren, umfasst das Schienenfahrzeug beispielsweise ein System, das signaltechnisch mit Sensoren aus den verschiedenen Innenräumen beziehungsweise Waggons verbunden ist. Die Sensoren sind zum Beispiel Kameras und/oder Gewichtssensoren in Sitzen, mit denen der Belegungsgrad in dem Innenraum ermittelbar ist. Das System ist zum Beispiel dazu eingerichtet, die Belegungsgrade in den unterschiedlichen Innenräumen miteinander zu vergleichen und beispielsweise ein Belegungsgradgefälle entlang des Schienenfahrzeuges zu ermitteln. In Abhängigkeit von dem Vergleich oder dem Belegungsgradgefälle steuert dann die Steuereinheit die Leuchte an, um den Weg zu einem weniger belegten Innenraum anzuzeigen.

Die LEDs können beispielsweise auch so angesteuert werden, dass für den Fahrgast sichtbare Bilder oder Piktogramme an dem Deckenelement dargestellt werden. Zum Beispiel kann durch die LEDs an der Decke ein Logo oder ein Schriftzug dargestellt werden. Auch Laufbilder können realisiert werden. Bevorzugt liegen in diesem Fall mehrere zweite Aufnahmeprofile, jeweils mit mehreren LEDs, in Querrichtung nebeneinander, ohne dass zwischen ihnen ein erstes Aufnahmeprofil mit zugeordnetem Zierprofil angeordnet ist.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
Figuren 1, 2, 5, 6, 10 und 11 verschiedene Ausführungsbeispiele des Deckenelements in perspektivischer Ansicht zeigen,
Figuren 3, 4, 12 und 13 Teile aus Ausführungsbeispielen des Deckenelements in perspektivischer Ansicht zeigen,
Figuren 7, 8, 9, 14 und 15 bis 21 jeweils ein Ausführungsbeispiel des Schienenfahrzeugs mit einem Deckenelement zeigen.

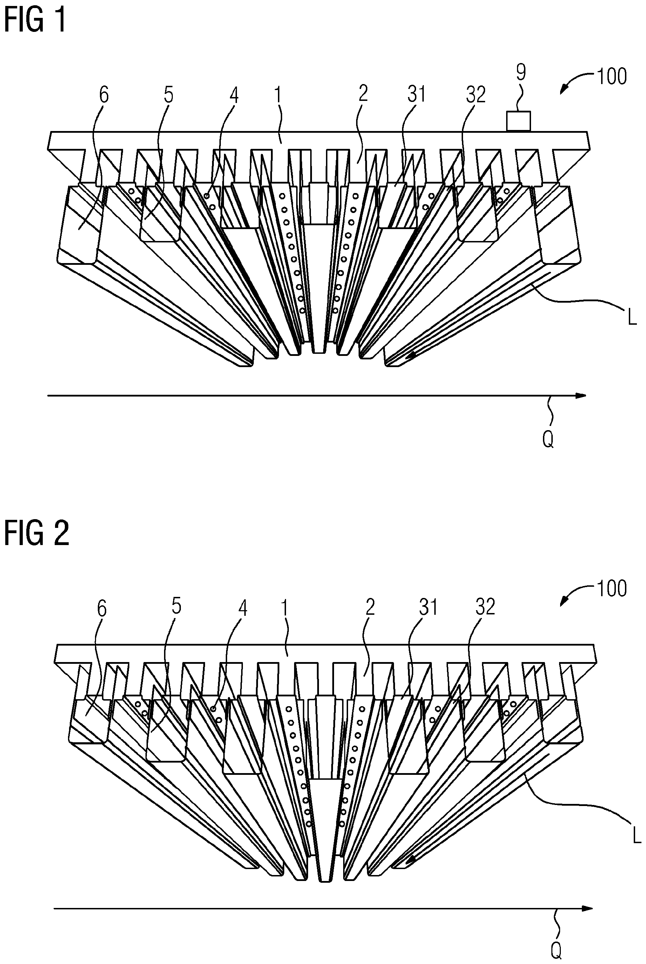

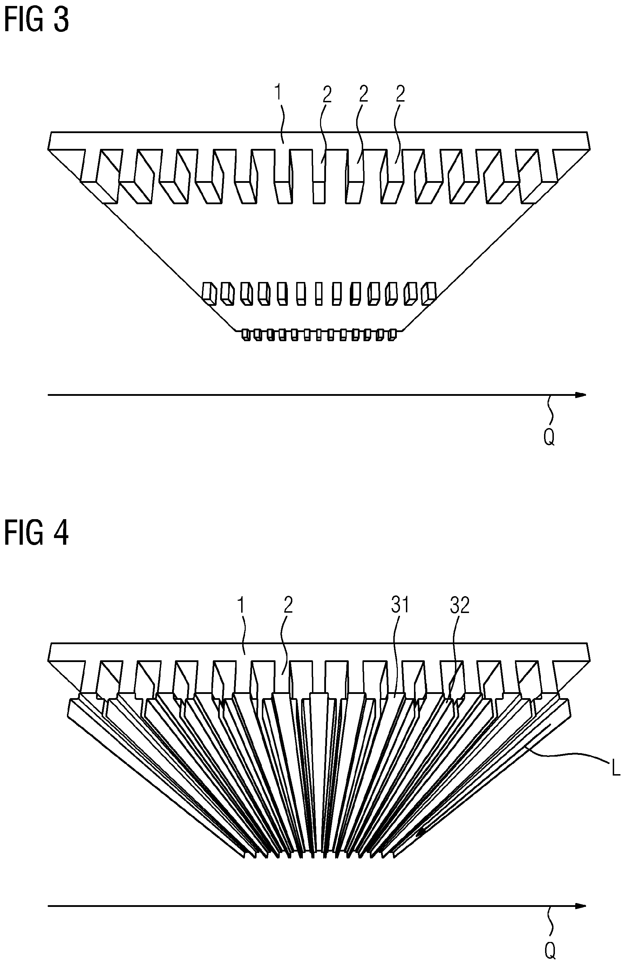

Figur 1 zeigt ein erstes Ausführungsbeispiel eines Deckenelements 100 in perspektivischer Ansicht. Das Deckenelement 100 umfasst einen plattenförmigen Träger 1 und Abstandshalter 2 auf einer Seite des Trägers 1. Der Träger 1 und die Abstandshalter 2 sind separat nochmal in Figur 3 dargestellt. Der Träger 1 und die Abstandshalter 2 sind beispielsweise aus Aluminium gebildet.

Auf den Abstandshaltern 2 sind längliche Aufnahmeprofile 31, 32 montiert. Durch die Abstandshalter 2 sind die Aufnahmeprofile 31, 32 von dem Träger 1 beabstandet. Die Aufnahmeprofile 31, 32 sind beispielsweise aus Kunststoff oder Aluminium gebildet. In einer Querrichtung Q sind die Aufnahmeprofile 31, 32 nebeneinander angeordnet. Die Aufnahmeprofile 31, 32 erstrecken sich jeweils entlang einer Längsrichtung L. Insbesondere sind die Aufnahmeprofile 31, 32 also parallel zueinander angeordnet (siehe insbesondere auch Figur 4).

Weiter ist in Figur 1 zu sehen, dass auf ersten Aufnahmeprofilen 31 jeweils Zierprofile 5 angeordnet sind. Die Aufnahmeprofile 31, 32 und die Zierprofile 5 sind hier jeweils U-Profile. Die Zierprofile 5 sind derart auf die ersten Aufnahmeprofile 31 geschoben, dass zwischen den ersten Aufnahmeprofilen 31 und den Zierprofilen 5 jeweils ein Kanal 6 gebildet ist, der sich entlang der Längsrichtung L erstreckt und in Richtungen senkrecht zur Längsrichtung vollständig umschlossen ist.

In zweiten Aufnahmeprofilen 32 sind in Längsrichtung L hintereinander aufgereihte LEDs 4 angeordnet. Die LEDs 4 sind insbesondere Teil eines LED-Bandes, welches in die zweiten Aufnahmeprofile 32 eingebracht ist. Über die offenen Seiten der zweiten Aufnahmeprofile 32 kann das von den LEDs 4 emittierte Licht austreten.

In der Figur 1 wechseln sich erste Aufnahmeprofile 31 mit zugeordneten Zierprofilen 5 und zweite Aufnahmeprofile 32 mit zugeordneten LEDs 4 in Querrichtung Q ab. Die LEDs 4 emittieren im Betrieb beispielsweise sichtbares Licht. Auf einer den Aufnahmeprofilen 31, 32 gegenüberliegenden Seite des Trägers 1 ist eine Steuereinheit 9 angeordnet, die signaltechnisch mit den LEDs 4 verbunden ist. Die Steuereinheit 9 ist dazu eingerichtet, die LEDs 4 einzeln oder Gruppen von LEDs 4 einzeln und unabhängig voneinander anzusteuern.

Wie in den Figuren 1 und 2 zu sehen ist, sind die Zierprofile 5 auf den zugeordneten ersten Aufnahmeprofilen 31 verschiebbar befestigt, so dass sich die Zierprofile 5 bezüglich der zugeordneten ersten Aufnahmeprofile 31 in Richtung hin und weg von dem Träger 1 verschieben lassen. Mit anderen Worten lassen sich die Abstände der Zierprofile 5 zu dem Träger 1 verändern. Folglich lassen sich auch die Volumina der zwischen den Zierprofilen 5 und den zugeordneten ersten Aufnahmeprofilen 31 gebildeten Kanäle 6 verändern. Die Verschiebbarkeit der Zierprofile 5 gegenüber den ersten Aufnahmeprofilen 31 ist vorliegend beispielsweise durch eine Ratschenfunktion realisiert. Dazu sind beispielsweise die Schenkel der ersten Aufnahmeprofile 31 und der zugeordneten Zierprofile 5, die in den Figuren aufeinander liegen, mit einer Zahnung versehen.

In den Figuren 1 und 2 sind nur zwei mögliche Gestaltungen des Deckenelements 100 gezeigt. In der Figur 1 ist das mittlere Zierprofil 5 am weitesten in Richtung des Trägers 1 verschoben. Die weiter außenliegenden Zierprofile 5 sind weiter von dem Träger 1 weggezogen. Das Deckenelement 100 weist dadurch eine konkave Krümmung auf. In der Figur 2 hingegen ist das mittlere Zierprofil 5 am weitesten von dem Träger 1 weggezogen. Die weiter außenliegenden Zierprofile 5 sind näher an den Träger 1 geschoben. Das Deckenelement 100 weist eine konvexe Krümmung auf.

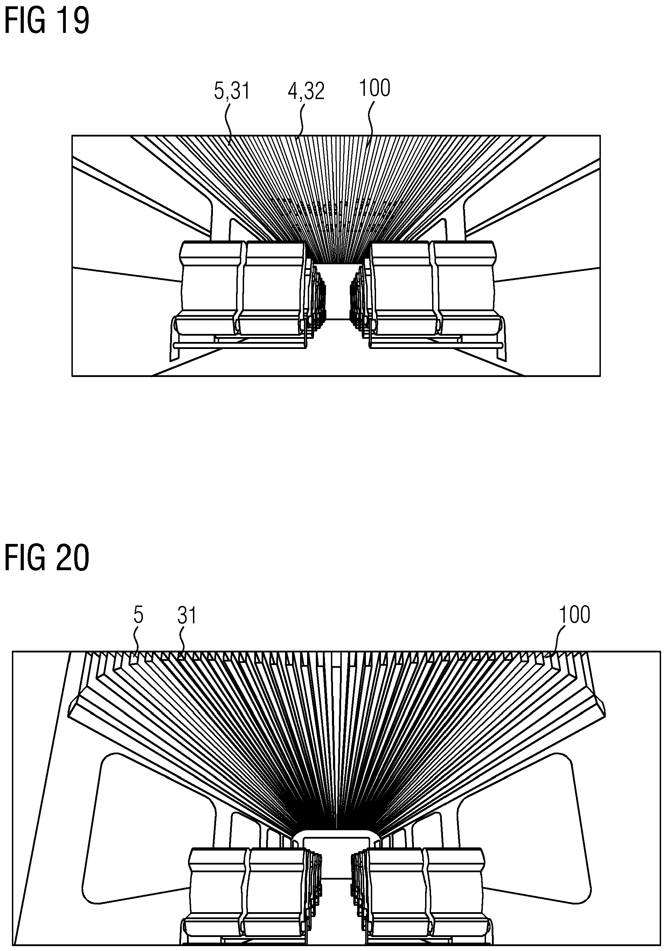

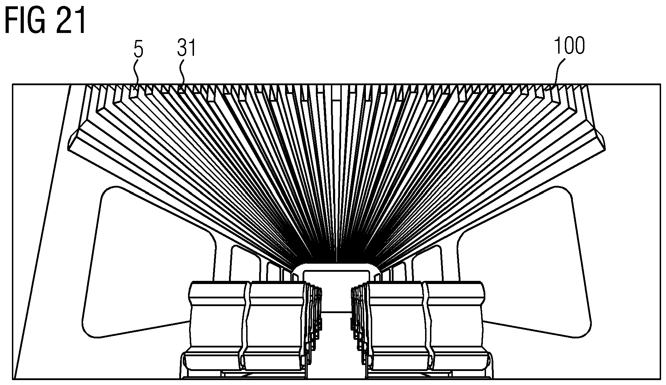

Da jedes Zierprofil 5 unabhängig von den anderen Zierprofilen 5 verschiebbar ist, sind auch verschiedenste weitere geometrische Formen des Deckenelements 100 realisierbar (siehe auch Figuren 20 und 21).

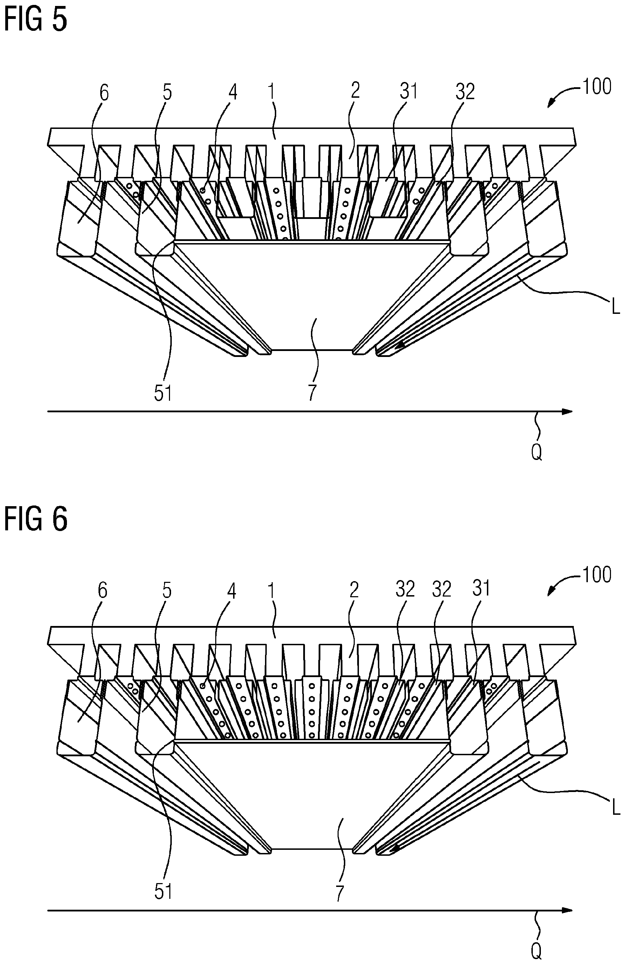

In den Figuren 5 und 6 sind zwei weitere Ausführungsbeispiele des Deckenelements 100 dargestellt. Hier ist zusätzlich eine Streuplatte 7 vorhanden, die das von den LEDs 4 emittierte Licht diffus streut. Die Streuplatte 7 ist dabei jeweils zwischen zwei Zierprofilen 5 eingespannt. Dazu weisen die Schenkel der Zierprofile 5 an Außenseiten Nuten 51 auf, in die die Streuplatte 7 eingeschoben ist. Die Streuplatte 7 überdeckt jeweils eine Mehrzahl von zweiten Aufnahmeprofilen 32 mit darin angeordneten LEDs 4.

Es sind auch Ausführungsbeispiele möglich, bei denen die Streuplatte 7 jeweils eine Mehrzahl von ersten 31 und zweiten 32 Aufnahmeprofilen überdeckt. Bei den überdeckten ersten Aufnahmeprofilen 31 sind in diesem Fall die dazugehörigen Zierprofile 5 weiter in Richtung Träger 1 eingeschobenen, sodass die Streuplatte 7 auch die entsprechenden Zierprofile 5 überdeckt (siehe auch Figur 5). Auf diese Weise können statt einer durchgängigen Lichtfläche durchgängige Lichtstreifen generiert werden, ohne dass man einzelne LEDs 4 innerhalb der Lichtstreifen wahrnimmt.

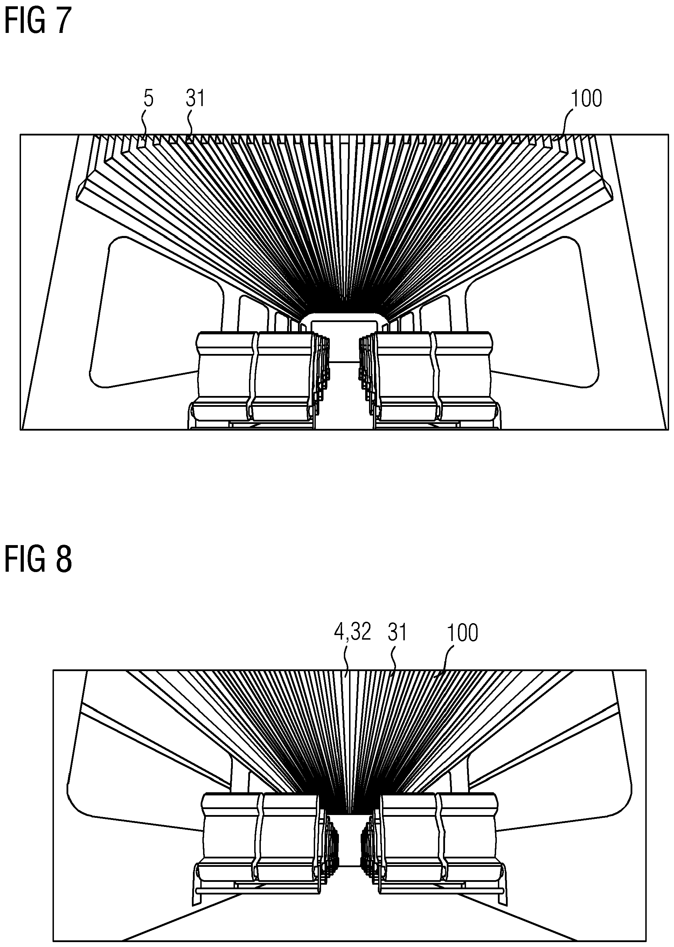

In der Figur 7 ist ein Ausführungsbeispiel eines Schienenfahrzeuges mit einem darin montierten Deckenelement 100 gezeigt. Vorliegend umfasst das Deckenelement 100 nur erste Aufnahmeprofile 31 mit zugeordneten Zierprofilen 5. Das Deckenelement 100 bildet die gesamte Decke in einem Innenraum des Schienenfahrzeuges. Die Zierprofile 5 sind so eingestellt, dass die Decke konkav gekrümmt ist.

In der Figur 8 ist ein weiteres Ausführungsbeispiel eines Schienenfahrzeuges gezeigt, bei dem das Deckenelement 100 zusätzlich zweite Aufnahmeprofile 32 mit darin angeordneten LEDs 4 aufweist. Die LEDs 4 beleuchten im Betrieb den Innenraum des Schienenfahrzeugs und zwar insbesondere den Mittelgang und den Bereich über den Fahrgastsitzen. Dadurch wird eine sehr homogene Lichtverteilung im Fahrgastraum erzeugt.

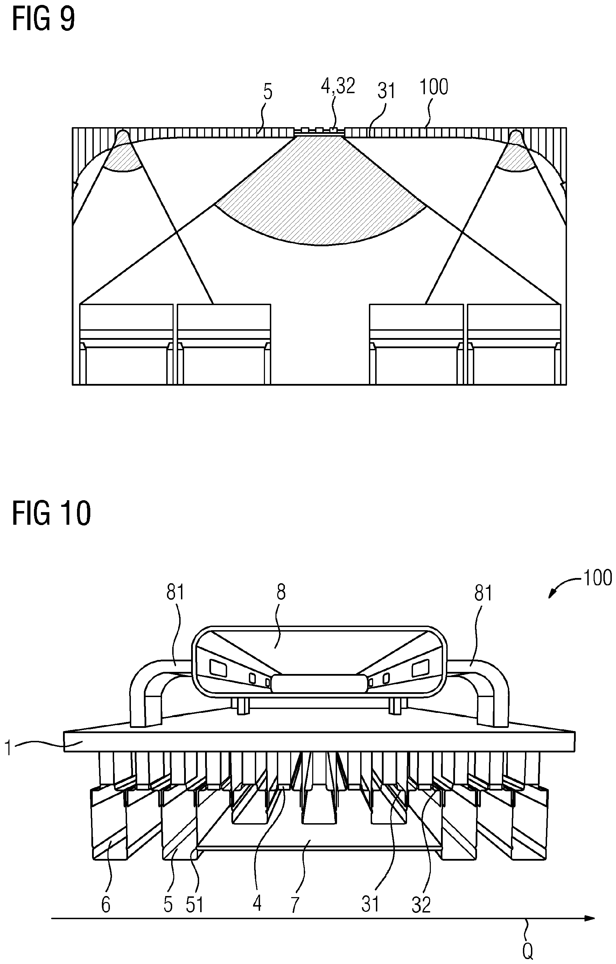

In der Figur 9 ist der Innenraum des Schienenfahrzeuges aus Figur 8 in einer Querschnittsansicht gezeigt.

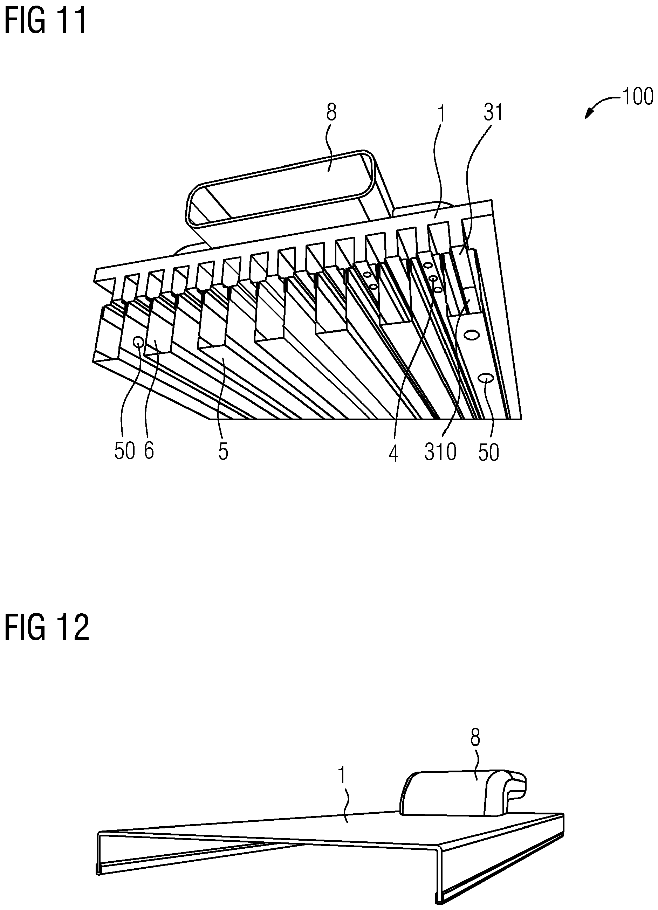

Figur 10 und 11 zeigen weitere Ausführungsbeispiele eines Deckenelements 100 in unterschiedlichen Ansichten. Hier ist zusätzlich auf einer den Aufnahmeprofilen 31, 32 abgewandten Seite des Trägers 1 ein Luftkanal 8, der durch ein Rohr gebildet ist, vorgesehen. Dem Luftkanal 8 wird im Betrieb kalte Luft oder warme Luft zugeführt, beispielsweise von einer Klimaanlage. Der Luftkanal 8 ist über Stichkanäle 81, welche ebenfalls durch Rohre gebildet sind, fluidtechnisch mit ausgewählten Kanälen 6 verbunden, die von den Zierprofilen 5 und jeweils dazugehörigen ersten Aufnahmeprofilen 31 gebildet werden. Dazu sind in den ausgewählten ersten Aufnahmeprofilen 31 Öffnungen 310 vorgesehen, über die die Stichkanäle 81 mit den Kanälen 6 verbunden sind. Außerdem weisen die Zierprofile 5 Löcher beziehungsweise Perforierungen 50 auf, über die die von dem Luftkanal 8 in die Kanäle 6 eingespeiste Luft in die Umgebung entweichen kann.

Durch die Verstellbarkeit des Abstandes der Zierprofile 5 zum Träger 1 kann die Größe beziehungsweise das Volumen des Entspannungsraumes, der durch die Kanäle 6 erzeugt wird, variiert werden und so die Ausströmgeschwindigkeit der Luft durch die Löcher 50 geregelt werden. Dies ermöglicht eine Optimierung der Klimatisierung in einem Innenraum eines Schienenfahrzeuges, in dem ein solches Deckenelement 100 verbaut ist.

In der Figur 12 ist ein zweites Ausführungsbeispiel für den Luftkanal 8 gezeigt. Der Träger 1 ist eine nach unten offene Halbschale, die an einer Stelle von dem Luftkanal 8 durchstoßen ist, sodass über den Luftkanal 8 zugeführte Luft in die Halbschale eindringt und sich dort verteilt.

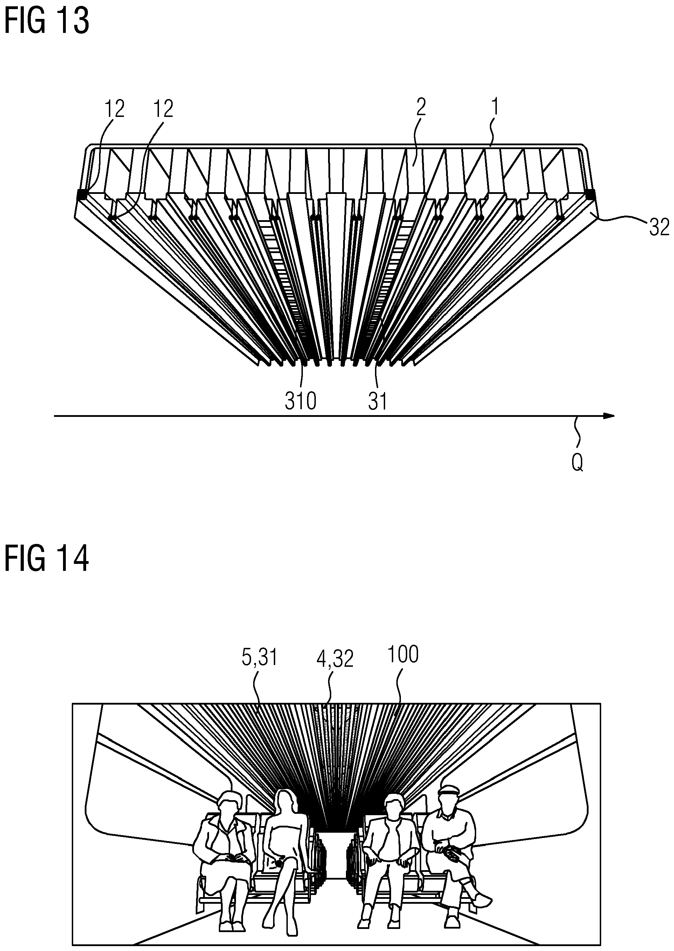

In der Figur 13 ist der Träger 1 der Figur 12 gezeigt, wobei nun zusätzlich Abstandshalter 2 auf der Innenseite des als Halbschale ausgeführten Trägers 1 angebracht sind und auf diesen Abstandshaltern 2 wiederum Aufnahmeprofile 31, 32 angeordnet sind. Erste Aufnahmeprofile 31, auf die später die Zierprofile 5 aufgebracht werden, sind hier jeweils mit Öffnungen 310 versehen, über die die von dem Luftkanal 8 zugeführte Luft in die Kanäle 6 einströmen kann. Um die Kanäle 6 am Übergang zwischen den Zierprofilen 5 und den ersten Aufnahmeprofilen 31 luftdicht abzudichten, ist auf den dem Träger 1 abgewandten Enden der Schenkel der ersten Aufnahmeprofile 31 jeweils ein Dichtgummi 12 vorgesehen. Solche Dichtgummis 12 sind bevorzugt auch im Ausführungsbeispiel der Figuren 10 und 11 vorhanden. Zudem kann die komplette Luftkanalkammer, die gebildet wird durch die Halbschale des Trägers 1 und den auf Abstandhaltern 2 montierten Aufnahmeprofilen 31,32, an deren Enden luftdicht über ein flexibles Material abgeschlossen sein.

Figur 14 zeigt wieder einen Innenraum eines Schienenfahrzeuges mit einem darin eingebauten Deckenelement 100. Die LEDs 4 des Deckenelements 100 werden hier so angesteuert, dass einem Fahrgast ein empfohlener Weg im Schienenfahrzeug anhand von Pfeilen signalisiert wird. Beispielsweise wird ein Weg zu einem weniger vollen Innenraum/Waggon des Schienenfahrzeuges gezeigt. Diese Pfeilsignale können über eine entsprechende LED-Ansteuerung auch als Laufsignal animiert werden.

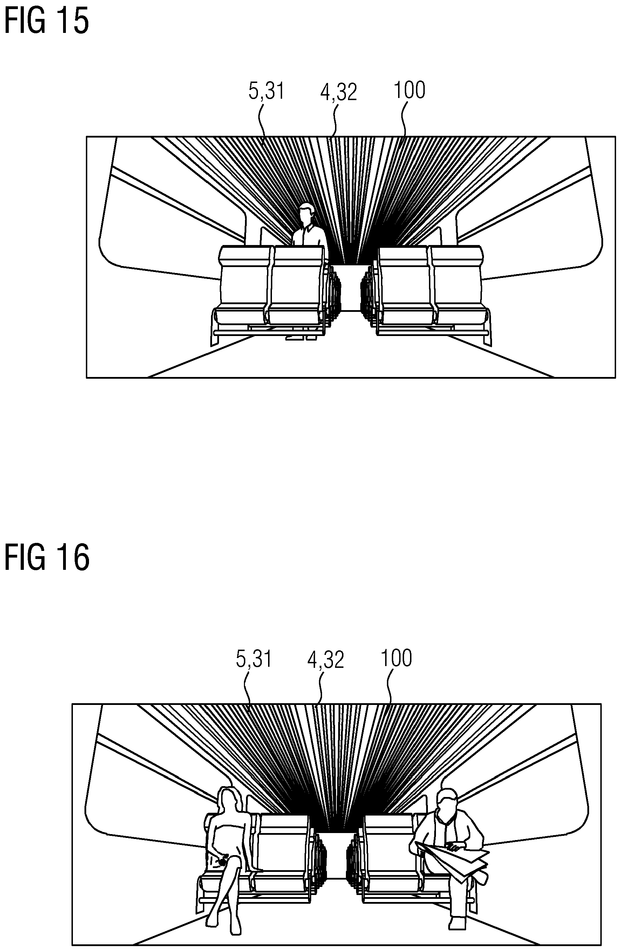

In der Figur 15 werden die LEDs 4 des Deckenelements 4 so angesteuert, dass sie grünes Licht emittieren. Dies signalisiert, dass der Belegungsgrad des Innenraums mit Fahrgästen gering ist.

In der Figur 16 ist der Belegungsgrad etwas höher. Entsprechend werden die LEDs 4 so angesteuert, dass sie gelbes Licht emittieren, was einen mittleren Belegungsgrad signalisiert.

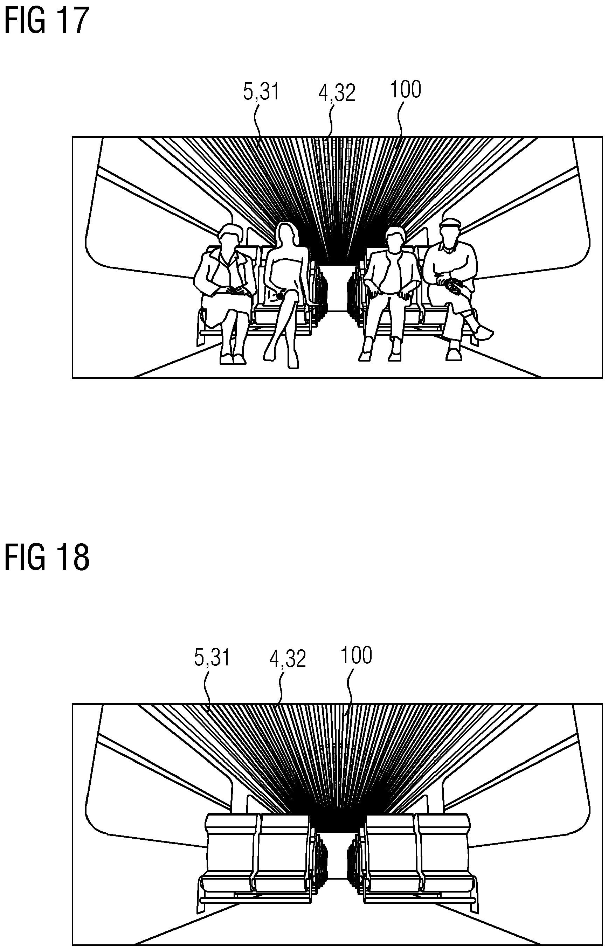

In der Figur 17 ist der Belegungsgrad hoch. Die LEDs 4 werden so angesteuert, dass sie rotes Licht emittieren, was einen hohen Belegungsgrad signalisiert.

In der Figur 18 werden die LEDs 4 des Deckenelements 100 so angesteuert, dass einem Fahrgast in dem Innenraum des Schienenfahrzeuges ein Logo angezeigt wird. Auch dieses Logo kann über eine entsprechende LED-Ansteuerung als Laufsignal animiert werden.

In der Figur 19 werden die LEDs 4 so angesteuert, dass dem Fahrgast ein Schriftzug angezeigt wird. Auch dieser Schriftzug kann über eine entsprechende LED-Ansteuerung als Laufsignal animiert werden.

Die Figuren 20 und 21 zeigen ergänzend zu Figur 7, wie die Form des Deckenelements 100 durch Verschieben der Zierprofile 5 variiert werden kann. Auf diese Weise kann in verschiedenen Fahrzeugplattformen oder in ein und demselben Fahrzeugtyp auf spezielle Kundenwünsche eingegangen werden und über die Deckenform, gegebenenfalls in Kombination mit einem speziellen Lichtszenario, eine individuelle Raumwirkung erzeugt werden. Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der Ansprüche zu verlassen.

## Patentansprüche

1. Deckenelement (100) für ein Schienenfahrzeug, umfassend
- einen Träger (1),
- mehrere, auf einer Seite des Trägers (1) angeordnete längliche Aufnahmeprofile (31, 32), wobei
- die Aufnahmeprofile (31, 32) in einer Querrichtung (Q) nebeneinander angeordnet sind und sich jeweils entlang einer senkrecht zur Querrichtung (Q) verlaufenden Längsrichtung (L) erstrecken,
**dadurch gekennzeichnet, dass**
- ersten Aufnahmeprofilen (31) jeweils ein längliches Zierprofil (5) zugeordnet ist, wobei ein einem ersten Aufnahmeprofil (31) zugeordnetes Zierprofil (5) auf diesem ersten Aufnahmeprofil (31) angeordnet ist, und
- die Zierprofile (5) an den ersten Aufnahmeprofilen (31) verschiebbar befestigt sind, sodass sich die Zierprofile (5) bezüglich der ersten Aufnahmeprofile (31) in Richtung hin und/oder weg von dem Träger (1) verschieben lassen.

2. Deckenelement (100) nach Anspruch 1, wobei
- in zweiten Aufnahmeprofilen (32) jeweils mehrere, in Längsrichtung (L) hintereinander aufgereihte LEDs (4) angeordnet sind,
- die Zierprofile (5) die LEDs (4) in Richtung weg von dem Träger (1) überragen.

3. Deckenelement (100) nach Anspruch 1 oder 2,
wobei die verschiebbare Befestigung der Zierprofile (5) an den ersten Aufnahmeprofilen (31) durch eine Ratschenfunktion und/oder ein Schraubengewinde und/oder höhenverstellbare Magnete realisiert ist.

4. Deckenelement (100) nach einem der vorhergehenden Ansprüche, wobei
- die Aufnahmeprofile (31, 32) und die Zierprofile (5) U-Profile sind,
- die Zierprofile (5) derart auf den ersten Aufnahmeprofilen (31) angeordnet sind, dass zwischen den ersten Aufnahmeprofilen (31) und den zugeordneten Zierprofilen (5) jeweils ein Kanal (6) gebildet ist.

5. Deckenelement (100) nach Anspruch 2 oder nach einem der Ansprüche 3 bis 4 in ihrem jeweiligen Rückbezug auf Anspruch 2,
wobei die ersten Aufnahmeprofile (31) und die zweiten Aufnahmeprofile (32) in Querrichtung (Q) alternierend angeordnet sind.

6. Deckenelement (100) nach Anspruch 2 oder nach einem der Ansprüche 3 bis 5 in ihrem jeweiligen Rückbezug auf Anspruch 2, weiter aufweisend
- eine Streuplatte (7) zur Streuung der von den LEDs (4) emittierten Strahlung,
- die Streuplatte (7) zwischen zwei Zierprofilen (5) eingespannt ist,
- ein oder mehrere zweite Aufnahmeprofile (32) mit LEDs (4) zwischen der Streuplatte (7) und dem Träger (1) angeordnet sind.

7. Deckenelement (100) nach Anspruch 4 oder einem der Ansprüche 5 bis 6 in ihrem Rückbezug auf Anspruch 4, weiter umfassend
- einen Luftkanal (8) an einer den Aufnahmeprofilen (31, 32) abgewandten Seite des Trägers (1), wobei
- zumindest einige Kanäle (6) über Öffnungen (310) in den zugeordneten ersten Aufnahmeprofilen (31) fluidtechnisch mit dem Luftkanal (8) verbunden sind, sodass über den Luftkanal (8) zugeführte Luft über die Öffnungen (310) in die Kanäle (6) einströmen kann.

8. Deckenelement (100) nach Anspruch 7,
wobei die den ersten Aufnahmeprofilen (31) mit Öffnungen (310) zugeordneten Zierprofile (5) Löcher (50) aufweisen, aus denen die Luft in die Umgebung ausströmen kann.

9. Deckenelement (100) nach Anspruch 2 oder einem der Ansprüche 3 bis 8 in ihrem jeweiligen Rückbezug auf Anspruch 2, weiter umfassend
- eine Steuereinheit (9), wobei
- die Steuereinheit (9) signaltechnisch mit den LEDs (4) verbunden ist,
- die Steuereinheit (9) dazu eingerichtet ist, die LEDs (4) oder Gruppen von LEDs (4) einzeln und unabhängig voneinander anzusteuern.

10. Schienenfahrzeug, aufweisend
ein Deckenelement (100) nach einem der vorhergehenden Ansprüche.

11. Verfahren zum Betreiben eines Deckenelements (100) nach Anspruch 9, wobei
- das Deckenelement (100) in einem Innenraum eines Schienenfahrzeugs verbaut ist,
- die LEDs (4) in Abhängigkeit davon, wie viele Fahrgäste im Innenraum des Schienenfahrzeugs sind, angesteuert werden und/oder
- die LEDs (4) so angesteuert werden, dass sie einem Fahrgast einen empfohlenen Weg im Schienenfahrzeug (1000) signalisieren und/oder
- die LEDs (4) so angesteuert werden, dass Bilder oder Piktogramme dargestellt werden.

## Claims

1. Ceiling element (100) for a rail vehicle, comprising
- a carrier (1),
- a plurality of elongated receiving profiles (31, 32) arranged on one side of the carrier (1), wherein
- the receiving profiles (31, 32) are arranged beside one another in a transverse direction (Q) and each extend along a longitudinal direction (L) running at right angles to the transverse direction (Q),
**characterized in that**
- first receiving profiles (31) are each assigned an elongated decorative profile (5), wherein a decorative profile (5) assigned to a first receiving profile (31) is arranged on this first receiving profile (31), and
- the decorative profiles (5) are displaceably fastened to the first receiving profiles (31), so that the decorative profiles (5) can be displaced in the direction toward and/or away from the carrier (1) with respect to the first receiving profiles (31) .

2. Ceiling element (100) according to Claim 1, wherein
- a plurality of LEDs (4) lined up one behind another in the longitudinal direction (L) are each arranged in second receiving profiles (32),
- the decorative profiles (5) project beyond the LEDs (4) in the direction away from the carrier (1).

3. Ceiling element (100) according to Claim 1 or 2,
wherein the displaceable fastening of the decorative profiles (5) to the first receiving profiles (31) is implemented by a ratchet function and/or a screw thread and/or height-adjustable magnets.

4. Ceiling element (100) according to one of the preceding claims, wherein
- the receiving profiles (31, 32) and the decorative profiles (5) are U-shaped profiles,
- the decorative profiles (5) are arranged on the first receiving profiles (31) in such a way that a respective duct (6) is formed between the first receiving profiles (31) and the associated decorative profiles (5).

5. Ceiling element (100) according to Claim 2 or according to either of Claims 3 and 4 in their respective reference back to Claim 2,
wherein the first receiving profiles (31) and the second receiving profiles (32) are arranged alternately in the transverse direction (Q).

6. Ceiling element (100) according to Claim 2 or according to one of Claims 3 to 5 in their respective reference back to Claim 2, further having
- a diffuser plate (7) for defusing the radiation emitted by the LEDs (4),
- the diffuser plate (7) is clamped in between two decorative profiles (5),
- one or more second receiving profiles (32) with LEDs (4) are arranged between the diffuser plate (7) and the carrier (1).

7. Ceiling element (100) according to Claim 4 or either of Claims 5 and 6 in their reference back to Claim 4, further comprising
- an air duct (8) on a side of the carrier (1) facing away from the receiving profiles (31, 32), wherein
- at least some ducts (6) are connected fluidly to the air duct (8) via openings (310) in the associated first receiving profiles (31), so that air supplied via the air duct (8) can flow in via the openings (310) in the ducts (6).

8. Ceiling element (100) according to Claim 7,
wherein the decorative profiles (5) assigned to the first receiving profiles (31) having openings (310) have holes (50), from which the air can flow out into the surroundings.

9. Ceiling element (100) according to Claim 2 or one of Claims 3 to 8 in their respective reference back to Claim 2, further comprising
- a control unit (9), wherein
- the control unit (9) has a signal connection to the LEDs (4),
- the control unit (9) is set up to activate the LEDs (4) or groups of LEDs (4) individually and independently of one another.

10. Rail vehicle, having
a ceiling element (100) according to one of the preceding claims.

11. Method for operating a ceiling element (100) according to Claim 9, wherein
- the ceiling element (100) is installed in an interior of a rail vehicle,
- the LEDs (4) are activated depending on how many passengers there are in the interior of the rail vehicle and/or
- the LEDs (4) are activated in such a way that they signal a recommended route in the rail vehicle (1000) to a passenger and/or
- the LEDs (4) are activated in such a way that images or pictograms are displayed.

## Revendications

1. Elément (100) de plafond pour un véhicule ferroviaire, comprenant
- un support (1),
- plusieurs profilés (31, 32) de réception oblongs disposés sur une face du support (1), dans lequel
- les profilés (31, 32) de réception sont disposés les uns à côté des autres dans une direction (Q) transversale et s'étendent respectivement suivant une direction (L) longitudinale s'étendant perpendiculairement à la direction (Q) transversale,
**caractérisé en ce que**,
- à des premiers profilés (31) de réception sont associés respectivement un profilé (5) décoratif oblong, dans lequel un profilé (5) décoratif, associé à un premier profilé (31) de réception, est monté sur ce premier profilé (31) de réception, et
- les profilés (5) décoratifs sont fixés de manière à pouvoir coulisser sur les premiers profilés (31) de réception, de manière à ce que les profilés (5) décoratifs puissent coulisser par rapport aux premiers profilés (31) de réception en se rapprochant et/ou en s'éloignant du support (1).

2. Elément (100) de plafond suivant la revendication 1, dans lequel
- dans des deuxièmes profilés (32) de réception sont disposés respectivement plusieurs DEL (4) rangées les unes derrière les autres dans la direction (L) longitudinale,
- les profilés (5) décoratifs dépassent des DEL (4) dans la direction en s'éloignant du support (1).

3. Elément (100) de plafond suivant la revendication 1 ou 2, dans lequel la fixation avec possibilité de coulisser des profilés (5) décoratifs aux premiers profilés (31) de réception est réalisée par une fonction d'encliquetage et/ou par un filet de vis et/ou par des aimants réglables en hauteur.

4. Elément (100) de plafond suivant l'une des revendications précédentes, dans lequel
- les profilés (31, 32) de réception et les profilés (5) décoratifs sont des profilés en U,
- les profilés (5) décoratifs sont disposés sur les premiers profilés (31) de réception, de manière à former respectivement un conduit (6) entre les premiers profilés (31) de réception et les profilés (5) décoratifs associés.

5. Elément (100) de plafond suivant la revendication 2 ou suivant l'une des revendications 3 à 4 lorsqu'elle se rapporte respectivement à la revendication 2,
dans lequel les premiers profilés (31) de réception et les deuxièmes profilés (32) de réception sont disposés en alternance dans la direction (Q) transversale.

6. Elément (100) de plafond suivant la revendication 2 ou suivant l'une des revendications 3 à 5 lorsqu'elle se rapporte respectivement à la revendication 2, comprenant en outre
- une plaque (7) de diffusion pour la diffusion du rayonnement émis par les DEL (4),
- la plaque (7) de diffusion est encastrée entre deux profilés (5) décoratifs,
- un ou plusieurs deuxièmes profilés (32) de réception avec des DEL (4) sont disposés entre la plaque (7) de diffusion et le support (1).

7. Elément (100) de plafond suivant la revendication 4 ou suivant l'une des revendications 5 à 6 lorsqu'elle se rapporte respectivement à la revendication 4, comprenant en outre
- un conduit (8) pour de l'air sur une face, non tournée vers les profilés (31, 32) de réception, du support (1), dans lequel
- au moins certains conduits (6) communiquent en technique des fluides avec le conduit (8) pour de l'air par des ouvertures (310) dans les premiers profilés (31) de réception associés, de manière à ce que de l'air, apporté par le conduit (8) pour de l'air, puisse entrer dans les conduits (6) par les ouvertures (310).

8. Elément (100) de plafond suivant la revendication 7,
dans lequel les profilés (5) décoratifs, associés au premier profilé (31) de réception avec des ouvertures (310), ont des trous (50), à partir desquels l'air peut sortir dans l'atmosphère ambiante.

9. Elément (100) de plafond suivant la revendication 2 ou l'une des revendications 3 à 8 lorsqu'elle se rapporte à la revendication 2, comprenant en outre
- une unité (9) de commande, dans lequel
- l'unité (9) de commande est reliée en technique du signal avec les DEL (4),
- l'unité (9) de commande est agencée pour commander individuellement et indépendamment les uns des autres les DEL (4) ou des groupes de DEL (4).

10. Véhicule ferroviaire, comportant
un élément (100) de plafond suivant l'une des revendications précédentes.

11. Procédé pour faire fonctionner un élément (100) de plafond suivant la revendication 9, dans lequel
- l'élément (100) de plafond est posé dans un espace intérieur d'un véhicule ferroviaire,
- on commande les DEL (4) en fonction du nombre de passagers dans l'espace intérieur du véhicule ferroviaire, et/ou
- on commande les DEL (4), de manière à ce qu'elles signalent à un passager un chemin recommandé dans le véhicule (1000) ferroviaire, et/ou
- on commande les DEL (4), de manière à représenter des images ou des pictogrammes.
